# EUROPÄISCHE PATENTSCHRIFT

(11) **EP 3 126 446 B1**
(45) Veröffentlichungstag und Bekanntmachung des Hinweises auf die Patenterteilung: **09.05.2018**
(21) Anmeldenummer: 15711746.6
(22) Anmeldetag: 23.03.2015
(51) Int. Cl.: C08L 67/02

(54) **POLYESTERMISCHUNG**
POLYESTER COMPOSITION
COMPOSITION DE POLYESTER

(30) Priorität: 02.04.2014 EP 14163169
(43) Veröffentlichungstag der Anmeldung: 08.02.2017
(73) Patentinhaber: BASF SE, 67056 Ludwigshafen am Rhein (DE)
(72) Erfinder: MÖLLER, Anna Karina, 64295 Darmstadt (DE); MOLAWI, Kian, 68163 Mannheim (DE); YAMAMOTO, Motonori, 68199 Mannheim (DE)
(74) Vertreter: BASF IP Association
(86) Internationale Anmeldenummer: PCT/EP2015/056096
(87) Internationale Veröffentlichungsnummer: WO 2015/150141

(56) Entgegenhaltungen:
- WO-A1-2013/097013
- US-A1- 2013 270 212
- DE JONG E ET AL: "Furandicarboxylic Acid (FDCA), A Versatile Building Block for a Very Interesting Class of Polyesters", BIOBASED MONOMERS, POLYMERS, AND MATERIALS; [ACS SYMPOSIUM SERIES], AMERICAN CHEMICAL SOCIETY, WASHINGTON, DC, PAGE(S) 1 - 13 , 10. August 2012 (2012-08-10), XP002716722, DOI: 10.1021/bk-2012-1105.ch001 ISBN: 978-0-8412-2767-5 Gefunden im Internet: URL:http://www.researchgate.net/publicatio n/234111253_Furandicarboxylic_acid_(FDCA)_ a_versatile_building_block_for_a_very_inte resting_class_of_polyesters/file/d912f512c 8c9ab0479.pdf [gefunden am 2012-08-16]

## Beschreibung

Die vorliegende Erfindung betrifft eine Polyestermischung enthaltend:
i) 95 bis 99,95 Gew.-%, bezogen auf die Komponenten i und ii, eines Polyesters ausgewählt aus der Gruppe bestehend aus: Polybutylenterephthalat, Polycyclohexylendimethylen-2,5- furandicarboxylat, Polybutylenadipat-coterephthalat, Polybutylensebacat-coterephthalat, Polybutylensuccinat-coterephthalat, Polybutylen-2,5-furandicarboxylat-cosuccinat, Polybutylen-2,5-furandicarboxylat-coadipat, Polybutylen-2,5-furandicarboxylat-coazelat, Polybutylen-2,5-furandicarboxylat-cosebacat, Polybutylen-2,5-furandicarboxylat-cobrassylat, Poly-butylen-2,5-furandicarboxylat-co-1,18-C₁₈-dicarboxylat, Polybutylensuccinat, Polybutylenadipat, Polybutylensuccinat-coadipat, Polybutylensuccinat-cosebacat, Polybutylensebacat oder Mischungen von 2 oder mehreren der genannten Polyester, und
ii) 0,05 bis 5% Gew.-%, bezogen auf die Komponenten i und ii, Poly-ethylen-2,5-furandicarboxylat.

Polyester gebildet aus mindestens einer Dicarbonsäure oder einem Dicarbonsäurederivat und mindestens einem Diol sind literaturbekannt. Insbesondere das aus der aromatischen Dicarbonsäure "Terephthalsäure" aufgebauten Polybutylenterephthalat hat eine große wirtschaftliche Bedeutung erlangt. Biologisch abbaubare Polyester wie beispielsweise Polybutylenadipat-coterephthalat und Polybutylensebacat-coterephthalat spielen insbesondere bei der Verpackung von Lebensmitteln eine immer größere Rolle. In jüngere Zeit stehen Polyester auf Basis von Dicarbonsäuren wie Bernsteinsäure, Sebazinsäure oder 2,5-Furandicarbonsäure oder Diolen wie 1,4-Butandiol, die aus nachwachsenden Rohstoffen zugänglich sind, im Fokus.

Der Einsatz von Nukleierungsmitten wie beispielsweise Kalk oder Kreide ist bei den auf dem Markt erhältlichen Polyestern gut untersucht. Nukleierungsmittel werden häufig zugesetzt, um die Kristallisation zu beschleunigen bzw. den Rekristallisationspunkt zu höheren Temperaturen zu verschieben. Bei der Spritzgussanwendung können so Taktzeiten reduziert und Ressourcen geschont werden. Auch lässt sich die Transparenz dünnwandiger Bauteile durch die Nukleierung verbessern. Insbesondere lässt sich durch Zusatz von Nukleierungsmitteln die Verarbeitbarkeit und Isolierung von Polymeren, vor allem amorpher Polymere verbessern. Der Einsatz von für Spritzgussanwendungen typischer Nukleierungsmittel wie Talk, Kreide oder AlkalimetallSalze von Carbonsäuren ist bekannt (Modern Polyesters: "Chemistry and Technology of Polyesters and Copolyesters" (Buch von John Scheirs (Editor) und Timothy E. Long (Editor), Wiley-Verlag, erschienen 2003, Seite 515-520). Talk führt bei den eingangs genannten Polyestern (Komponente i) nicht immer zu einem zufriedenstellenden Ergebnis.

Ziel war es demnach ein geeignetes Nukleierungsmittel für die eingangs genannten Polyester zu finden.

Überraschenderweise wurde Poly-ethylen-2,5-furandicarboxylat als ein geeignetes Nukleierungsmittel gefunden.

Im Folgenden wird die Erfindung näher beschrieben:
Als Komponente i kommen Polyester gebildet aus mindestens einer Dicarbonsäure oder einem Dicarbonsäurederivat und mindestens einem Diol in Frage.

Als Dicarbonsäuren sind aliphatische C₄-C₁₈-Disäuren oder Mischungen davon, aromatische C₆ -C₁₄-Disäuren oder Mischungen davon, oder Mischungen von aromatischen C₆-C₁₄- und aliphatischen C₄-C₁₈-Disäuren geeignet. Die Dicarbonsäuren machen in der Regel mehr als 50, vorzugsweise mehr als 70 mol% und insbesondere bevorzugt mehr als 99 mol% der Säure-Wiederholungseinheiten aus.

Unter aliphatischen C₄-C₁₈-Dicarbonsäuren sind beispielhaft zu nennen: Bernsteinsäure, Glutarsäure, Adipinsäure, Pimelinsäure, Azelainsäure, Sebacinsäure, Brassylsäure, Suberinsäure (Korksäure) . Dabei können die Dicarbonsäuren oder deren esterbildenden Derivate, einzeln oder als Gemisch aus zwei oder mehr davon eingesetzt werden.

Bevorzugt werden Bernsteinsäure, Adipinsäure, Azelainsäure, Sebacinsäure, Brassylsäure oder deren jeweilige esterbildenden Derivate oder Mischungen davon eingesetzt. Besonders bevorzugt werden Bernsteinsäure, Adipinsäure oder Sebacinsäure oder deren jeweilige esterbildenden Derivate oder Mischungen davon eingesetzt. Bernsteinsäure, Azelainsäure, Sebacinsäure und Brassylsäure haben zudem den Vorteil, dass sie aus nachwachsenden Rohstoffen zugänglich sind.

Unter aromatischen C₆-C₁₄-Dicarbonsäuren sind Terephthalsäure oder 2,5-Furandicarbonsäure, die ebenfalls aus nachwachsenden Rohstoffen zugänglich ist, zu verstehen.

Unter Säurederivaten sind C₁-C₆-Alkylester zu verstehen, wobei die Methyl- und Ethylester besonders bevorzugt sind.

Als Diole kommen aliphatische Diole wie Ethylenglykol, 1,3-Propandiol, 1,4-Butandiol und 2,2-Dimethyl- 1,3-propandiol (Neopentylglykol) in Frage. Letztere haben zudem den Vorteil, dass sie als nachwachsender Rohstoff zugänglich sind. Es können auch Mischungen unterschiedlicher Alkandiole verwendet werden; die Hauptkomponente ist 1,4-Butandiol.

Als Diole kommen auch cycloaliphatische Diole wie 1,4-Cyclohexandimethanol (cis/trans), in Frage.

Komponente i ist ein Polyester ausgewählt aus der Gruppe bestehend aus: Polybutylenterephthalat (PBT), Polycyclohexylendimethylen-2,5-furandicarboxylat (PCF), Polybutylenadipat-coterephthalat (PBAT), Polybutylensebacat-coterephthalat (PBSeT), Polybutylensuccinat-coterephthalat (PBST), Poly-butylen-2,5-furandicarboxylat-cosuccinat (PBSF), Poly-butylen-2,5-furandicarboxylat-coadipat (PBAF), Poly-butylen-2,5-furandicarboxylat-coazelat (PBAzF), Polybutylen-2,5-furandicarboxylat-cosebacat (PBSeF), Poly-butylen-2,5-furandicarboxylat-cobrassylat (PBBrF), Poly-butylen-2,5-furandicarboxylat-co-1,18-C₁₈-dicarboxylat, Polybutylensuccinat (PBS), Polybutylenadipat (PBA), Polybutylensuccinat-coadipat (PBSA), Polybutylensuccinat-cosebacat (PBSSe), Polybutylensebacat (PBSe) oder Mischungen von 2 oder mehreren der genannten Polyester.

Als aromatische Polyester i auf Basis von Terephthalsäure kommt das im Markt erhältliche Polybutylenterephthalat (PBT) in Frage.
Ein aromatische Polyester i auf Basis von 2,5-Furandicarbonsäure ist Polycyclohexylendime-thylen-2,5-furandicarboxylat (PCF) das wie in WO 2013/062408, WO2010/077133, WO2007/052847 beschrieben, hergestellt werden kann.

Polycyclohexylendimethylen-2,5-furandicarboxylat (PCF) ist ein teilkristalliner Polyester, der sich auf Grund seines thermischen Profils für Spritzgussanwendungen eignet. Er hat eine Tg von 86-87°C, einen Schmelzpunkt von 267°C und einen Rekristallisationspunkt von 217-223°C. Für die meisten Verarbeitungsschritte (z.B. Spritzguss) ist es vorteilhaft, wenn die eingesetzten Thermoplasten möglichst schnell bei möglichst hohen Temperaturen aus der Schmelze kristallisieren, um die Zykluszeiten niedrig zu halten. Im Vergleich zu PBT, einem anderen typischen teilkristallinen Polyester für Spritzgussanwendungen, kristallisiert PCF aus der Schmelze mit einer geringeren Kristallisationsgeschwindigkeit. Hier ist die Nukleierung daher besonders wichtig.

Unter aliphatisch-aromatische Polyester i auf Basis von Terephthalsäure sind Polybutylenadipatterephthalat (PBAT), Polybutylensebacatterephthalat (PBSeT) oder Polybutylensuccinatterephthalat (PBST) und ganz besonders bevorzugt Polybutylenadipatterephthalat (PBAT) und Polybutylensebacatterephthalat (PBSeT) zu verstehen. Zu den geeigneten aliphatisch-aromatischen Polyestern gehören lineare nicht kettenverlängerte Polyester (WO 92/09654). Bevorzugt werden kettenverlängerte und/oder verzweigte teilaromatische Polyester. Letztere sind aus den Schriften, WO 96/15173 bis 15176, 21689 bis 21692, 25446, 25448 oder der WO 98/12242, bekannt, auf die ausdrücklich Bezug genommen wird. Mischungen unterschiedlicher aliphatisch-aromatischer Polyester kommen ebenso in Betracht. Interessante jüngere Entwicklungen basieren auf nachwachsenden Rohstoffen (siehe WO-A 2006/097353, WO-A 2006/097354 sowie WO2010/034689). Insbesondere sind unter teilaromatischen Polyestern Produkte wie ecoflex® (BASF SE) und Eastar® Bio, Origo-Bi® (Novamont) zu verstehen.

Unter aliphatisch-aromatische Polyester i auf Basis von 2,5-Furandicarbonsäure sind Polybutylen-2,5-furandicarboxylat-cosuccinat, Poly-butylen-2,5-furandicarboxylat-coadipat, Polybutylen-2,5-furandicarboxylat-coazelat, Poly-butylen-2,5-furandicarboxylat-cosebacat, Polybutylen-2,5-furandicarboxylat-cobrassylat und Poly-butylen-2,5-furandicarboxylat-co-1,18-C₁₈-dicarboxylat zu verstehen.

Unter aliphatischen Polyestern i werden Polyester aus aliphatischen Diolen und aliphatischen Dicarbonsäuren wie Polybutylensuccinat (PBS), Polybutylenadipat (PBA), Polybutylensuccinatadipat (PBSA), Polybutylensuccinatsebacat (PBSSe), Polybutylensebacat (PBSe) oder entsprechende Polyesteramide oder Polyesterurethane verstanden. Die aliphatischen Polyester werden beispielsweise von den Firmen Showa Highpolymers unter dem Namen Bionolle und von Mitsubishi unter dem Namen GSPIa vermarktet. Neuere Entwicklungen sind in der WO 2010/034711 beschrieben. Bevorzugte aliphatische Polyester sind Polybutylensuccinatsebacat (PBSSe) und insbesondere bevorzugt Polybutylensuccinat (PBS).

In der Regel enthalten die Polyester i 0,01 bis 2 Gew.-%, vorzugsweise 0,1 bis 1,0 Gew.-% und insbesondere bevorzugt 0,1 bis 0,3 Gew.-%, bezogen auf das Gesamtgewicht des Polyesters, eines Verzweigers und/oder 0,1 bis 1,0 Gew.- %, bezogen auf das Gesamtgewicht des Polyesters, eines Kettenverlängerers eingesetzt. Der Verzweiger ist bevorzugt ausgewählt aus der Gruppe bestehend aus: einem polyfunktionellen Isocyanat, Isocyanurat, Oxazolin, Epoxid, Peroxid, Carbonsäureanhydrid , einem mindestens trifunktionellen Alkohol oder einer mindestens trifunktionellen Carbonsäure. Als Kettenverlängerer kommen insbesondere difunktionelle Isocyanate, Isocyanurate, Oxazoline, Carbonsäureanhydrid oder Epoxide in Frage.

Besonders bevorzugte Verzweiger haben drei bis sechs funktionelle Gruppen. Beispielhaft seien genannt: Weinsäure, Zitronensäure, Apfelsäure; Trimethylolpropan, Trimethylolethan; Pentaerythrit; Polyethertriole und Glycerin, Trimesinsäure, Trimellitsäure, Trimellitsäureanhydrid, Pyromellitsäure und Pyromellitsäuredianhydrid. Bevorzugt sind Polyole wie Trimethylolpropan, Pentaerythrit und insbesondere Glycerin. Mittels der Komponente lassen sich biologisch abbaubare Polyester mit einer strukturellen Viskosität aufbauen. Die biologisch abbaubaren Polyester lassen sich leichter verarbeiten.

Unter einem Diisocyanat werden im Rahmen der vorliegenden Erfindung vor allem lineare oder verzweigte Alkylendiisocyanate oder Cycloalkylendiisocyanate mit 2 bis 20 Kohlenstoffatomen, bevorzugt 3 bis 12 Kohlenstoffatomen, z.B. 1,6-Hexamethylendiisocyanat, Isophorondiisocyanat oder Methylen-bis(4-isocyanatocyclo-hexan), verstanden. Besonders bevorzugte aliphatische Diisocyanate sind Isophorondiisocyanat und insbesondere 1,6-Hexamethylendiisocyanat.

Unter polyfunktionellen Epoxiden wird insbesondere ein Epoxidgruppen-haltiges Copolymer auf Basis Styrol, Acrylsäureester und/oder Methacrylsäureester verstanden. Die Epoxidgruppen tragenden Einheiten sind vorzugsweise Glycidyl(meth)acrylate. Als vorteilhaft haben sich Copolymere mit einem Glycidylmethacrylat-Anteil von größer 20, besonders bevorzugt von größer 30 und insbesondere bevorzugt von größer 50 Gew.-% des Copolymers erwiesen. Das EpoxidÄquivalentgewicht (EEW) in diesen Polymeren beträgt vorzugsweise 150 bis 3000 und insbesondere bevorzugt 200 bis 500 g/Äquivalent. Das mittlere Molekulargewicht (Gewichtsmittel) M_{W} der Polymere beträgt vorzugsweise 2000 bis 25.000, insbesondere 3000 bis 8.000. Das mittlere Molekulargewicht (Zahlenmittel) Mₙ der Polymere beträgt vorzugsweise 400 bis 6.000, insbesondere 1000 bis 4.000. Die Polydispersität (Q) liegt im Allgemeinen zwischen 1.5 und 5. Epoxidgruppen-haltige Copolymere des obengenannten Typs werden beispielsweise von der BASF Resins B.V. unter der Marke Joncryl® ADR vertrieben. Als Kettenverlängerer besonders geeignet ist beispielsweise Joncryl® ADR 4368.

In der Regel ist es sinnvoll die verzweigenden (mindestens trifunktionellen) Verbindungen zu einem früheren Zeitpunkt der Polymerisation zuzugeben.

Die Polyester i weisen in der Regel ein zahlenmittleres Molekulargewicht (Mn) im Bereich von 5000 bis 100000, insbesondere im Bereich von 10000 bis 75000 g/mol, bevorzugt im Bereich von 15000 bis 38000 g/mol, ein gewichtmittleres Molekulargewicht (Mw) von 30000 bis 300000, vorzugsweise 60000 bis 200000 g/mol und ein Mw/Mn-Verhältnis von 1 bis 6, vorzugsweise 2 bis 4 auf. Die Viskositätszahl gemäß ISO 1628-5 (gemessen in 0,05 g/ml Lösung Phenol/o-Dichlorbenzol (1:1)) liegt zwischen 50 und 450, vorzugsweise von 80 bis 250 mL/g (gemessen in o-Dichlorbenzol/Phenol (Gewichtsverhältnis 50/50). Der Schmelzpunkt liegt im Bereich von 85 bis 150, bevorzugt im Bereich von 95 bis 140°C.

Als geeignetes Nukleierungsmittel hat sich Poly-ethylen-2,5-furandicarboxylat (PEF; Komponente ii) herausgestellt. PEF ist nach WO 2013/062408, WO2010/077133 und WO2007/052847 zugänglich.

PEF wird in der Regel in 0,05 bis 5 Gew.-%, bezogen auf die Komponenten i und ii, und vorzugsweise in 0,1 bis 2 Gew.-%, bezogen auf die Komponenten i und ii, eingesetzt. Es können auch höhere Mengen wie beispielsweise 10 Gew.-% PEF zum Einsatz gelangen. In manchen Fällen schwächt sich bei einem Einsatz von mehr als 5 Gew.-%, bezogen auf die Komponenten i und ii, PEF jedoch der nukleierende Effekt wieder ab.

In einer bevorzugten Ausführungsform wird PEF eingesetzt um die Kristallisation zu beschleunigen bzw. den Rekristallisationspunkt zu höheren Temperaturen zu verschieben. Bei der Spritzgussanwendung können so Taktzeiten reduziert und Ressourcen geschont werden. Bei Polyestern i, gebildet aus mindestens einer aromatischen Dicarbonsäure oder einem Dicarbonsäurederivat, hat sich PEF mit einer Viskositätszahl (VN) gemäß ISO 1628-5 (gemessen in 0,05 g/ml Lösung Phenol/o-Dichlorbenzol (1:1)) von größer 30, vorzugsweise größer 40 ml/g als besonders vorteilhaft herausgestellt. Bei Polyestern i, gebildet aus mindestens einer aliphatischen Dicarbonsäure oder aus jeweils einer aliphatischen und aromatischen Dicarbonsäure oder einem entsprechenden Dicarbonsäurederivat, hat sich PEF mit einer Viskositätszahl (VN) gemäß ISO 1628-5 (gemessen in 0,05 g/ml Lösung Phenol/o-Dichlorbenzol (1:1) von größer 10, vorzugsweise größer 20 ml/g als besonders vorteilhaft herausgestellt.

Wie in den Beispielen der Tabelle 1 gezeigt, lassen sich bei aromatischen Polyestern i wie Polycyclohexylendimethylen-2,5-furandicarboxylat oder Polybutylenterephthalat die Rekristallisationstemperatur stark erhöhen. Überraschenderweise wirkt PEF deutlich stärker nukleierend auf die Polyester i als herkömmliche Nukleierungsmittel. Umgekehrt wirkt Polycyclohexylendimethylen-2,5-furandicarboxylat nicht nukleierend auf PEF.
Wie in den Beispielen der Tabelle 2 gezeigt, lassen sich auch bei aliphatisch-aromatischen Polyestern i wie Polybutylensebacat-coterephthalat oder Polybutylenadipat-coterephthalat oder aliphatischen Polyestern i wie Polybutylensuccinat oder Polybutylensuccinat- cosebacat die Rekristallisationstemperatur stark erhöhen.

Polyester i wie Polybutylensuccinat-co-2,5-furandicarboxylat oder Polybutylensebacat-co-2,5-furandicarboxylat rekristallisieren ohne Zusatz von PEF nicht. Diese aliphatisch-aromatischen Polyester lassen sich daher nach ihrer Synthese kaum isolieren. Durch die Nukleierung mit PEF setzt die Kristallisation bereits bei über 100°C ein, sodass sich diese Polyester durch Granulierung einfach isolieren lassen. Die erfindungsgemäße Nukleierung mit PEF stellt somit auch ein vorteilhaftes Verfahren zur Herstellung und Isolierung granularer Polyester i mit geringer bzw. ohne Kristallisierneigung dar. Umgekehrt wirkt PEF nicht nukleierend auf Polyester, die nicht aus Dicarbonsäuren und Diolen aufgebaut sind wie beispielsweise Polymilchsäure, das heißt auch bei Zusatz von 1 Gew.-%, 4 Gew.-% beziehungsweise 10 Gew.-% PEF konnte in der DSC kein Rekristallisationspunkt ermittelt werden.

Das Verfahren zur Herstellung einer granularen Polyestermischung wird vorzugsweise durchgeführt, indem
- in einem ersten Schritt die Monomere insbesondere:
   a) 20 bis 80 mol %, bezogen auf die Monomere a und b, einer α,ω-C₄-C₁₈-Disäure oder eines entsprechenden Disäurederivats;
   b) 20 bis 80 mol %, bezogen auf die Monomere a und b, einer 2,5-Furandicarbonsäure oder eines 2,5-Furandicarbonsäurederivats;
   c) 98 bis 100 mol%, bezogen auf die Monomere a und b, 1,4-Butandiol;
      zu einer Polyesterschmelze i mit geringer Kristallisierneigung kondensiert werden;
- in einem zweiten Schritt 0,05 bis 5 Gew.-%, bezogen auf die Komponenten i und ii, Polyethylen-2,5-furandicarboxylat (PEF) zu der Polyesterschmelze i zugegeben werden und
- in einem dritten Schritt die Polyestermischung granuliert wird.

Der erste Schritt kann nach literaturbekannten Verfahren batchweise oder vorzugsweise kontinuierlich durchgeführt werden (siehe WO 2009/135921). Ein bevorzugtes kontinuierliches Verfahren wird in der WO2009/127556 beschrieben. Hier wird in einer zweistufigen Reaktionskaskade zunächst die Dicarbonsäurederivate zusammen mit dem Diol in Anwesenheit eines Umesterungskatalysators zu einem Präpolyester in einem Turmreaktor, wobei das Kondensat im Gleichstrom abgezogen wird, umgesetzt. Dieser Präpolyester weist im Allgemeinen eine Viskositätszahl (VZ) von 50 bis 100 mL/g, vorzugsweise 60 bis 80 mL/g auf. Als Katalysatoren werden üblicherweise Zink-, Aluminium- und insbesondere Titankatalysatoren eingesetzt. Dieser Präpolyester wird in einem Käfigreaktor polykondensiert und schließlich mit Hexamethylendiisocyanat (HDI) kettenverlängert.
Im zweiten Schritt wird PEF (Komponente ii) beispielsweise in einem Extruder in die Polymerschmelze compoundiert. In dem bevorzugten kontinuierlichen Verfahren nach WO2009/127556 wird das Nukleierungsmittel vorzugsweise vor der Kettenverlängerung mit HDI zu der Polyesterschmelze i zugegeben. Der Zusatz des PEF kann vorteilhafterweise über einen Masterbatch, der neben Polyester i 5 bis 20 Gew.-% PEF enthält, erfolgen.

Die Granulierung (dritter Schritt) erfolgt vorzugsweise über eine Stranggranulierung oder eine Unterwassergranulierung. Hierbei wird die Polymerschmelze durch eine Düse gedrückt. Als Düse kann beispielsweise eine Lochplatte eingesetzt werden. Die Polymerschmelze wird in eine mit eine flüssigen Kühlmittel gefluteten Schneidkammer gedrückt. Die Schneidkammer umgibt die Düse, z.B. die Lochplatte und die Vorrichtung mit der die Polymerschmelze zerteilt wird. Die Größe und Gestalt der Schneidkammer ist prinzipiell frei wählbar und richtet sich nach praktischen Gesichtspunkten wie Größe der Lochplatte, Geometrie der Messer, Kühlmittelmenge, die durch die Schneidkammer transportiert werden soll oder Durchsatz an Polymer. Als Kühlmittel wird meist Wasser eingesetzt. Es können aber auch andere Kühlmittel wie ein- oder mehrwertige Alkohole z. B. Glykol oder Paraffine verwendet werden.

Das Kühlmittel wird gemäß einer bevorzugten Ausführungsform bei Normaldruck angewandt. Das Kühlmittel kann aber auch gemäß einer anderen bevorzugten Ausführungsform unter erhöhtem Druck angewandt werden. Schließlich wird die Polymerschmelze zerteilt. Hierfür können Schneidevorrichtungen wie rotierende Messer vorgesehen werden. Diese sind im Allgemeinen so angebracht, dass sie vor der Düse, z.B. der beheizten Düsenplatte, in der Schneidkammer rotieren. Die Drehzahlen liegen beispielsweise im Bereich von 300 bis 5000 Umdrehungen pro Minute.
Zwischen dem Austritt der Polymerschmelze und dem Zerteilen derselben liegen im Allgemeinen sehr kleine Zeiträume. Diese betragen erfindungsgemäß nicht mehr als 20 ms bevorzugt nicht mehr als 10 ms, insbesondere nicht mehr als 5 ms. Die so erhaltenen Granulate werden dann abgekühlt. Die bevorzugte Abkühlrate ist dabei abhängig von der Art des Polymeren. Erfindungsgemäß beträgt die Abkühlrate 2 bis 30°C/s, bevorzugt im Bereich von 5 bis 20°C/s, insbesondere im Bereich von 8 bis 15°C/s. Während des Abkühlschrittes beträgt das Volumenverhältnis von Granulat zu Kühlmittel in der Regel von 0,03 : 1 bis 0,12 :1, bevorzugt von 0,06 :1 bis 0,1 :1. Im Allgemeinen ist es bevorzugt, wenn die Granulate danach eine Außentemperatur von 80 bis 200°C, bevorzugt von 90 bis 120°C aufweisen. Bevorzugt ist es, die Granulate in dem gleichen Kühlmittel abzukühlen in das die Polymerschmelze gedrückt und in dem sie zerteilt wird.

Während die Granulate abkühlen werden sie bevorzugt gleichzeitig zu einer Trocknungsvorrichtung transportiert. Die Granulate können beispielsweise in üblichen Trocknungsvorrichtungen, wie sie in der Fachliteratur beschrieben sind, getrocknet werden. Beispiele geeigneter Trocknungsvorrichtungen sind Zentrifugaltrockner oder Wirbelbetttrockner.

### Anwendungstechnische Messungen:

Die Viskositätszahl VN wurde gemäß ISO 1628-5 vom 01.03.1998 in 0,05 g/ml Lösung in Phenol/-Dichlorbenzol (1:1) bestimmt.

Die thermischen Profile wurden am Differential Scanning Calorimeter (DSC) Q2000 der Fa. TA Instruments gemessen. Die Heizrate beträgt 20 K/min, die Einwaage ca. 8,5 mg. Spülgas ist Helium. Die Auswertung der Messkurven erfolgt in Anlehnung an die ISO-Norm 11357-2 und -3. Als Rekristallisationspunkt T_{K} wurde die Temperatur der Kristallisation am Maximum bestimmt. Als T_{KB} wurde die Temperatur des Kristallisationsbeginns bestimmt.

Alle Molekulargewichte wurden mit Gelpermeationschromatographie (GPC) ermittelt. Die für GPC verwendeten Bedingungen sind wie folgt: die Trennung wurde bei 40°C mit einer Flussrate von 1 ml/min betrieben. Als Eluent wurde Hexafluorisopropanol, das mit 0,05% Trifluoressigsäure-Kaliumsalz versetzt war, eingesetzt. Die Kalibrierung erfolgte mit eng verteilten PMMA-Standards der Firma PSS mit Molekulargewichten von M = 800 bis M = 1.820.000. Die Werte außerhalb dieses Elutionsbereiches wurden extrapoliert. Alle Proben wurden in Hexafluorisopropanol, das mit 0,05% Trifluoressigsäure-Kaliumsalz versetzt war, gelöst. Anschließend wurden die Proben über Millipore Millex FG (0,2 µm) filtriert und 500 µL wurde eingespritzt.

Der Polydispersitätsindex (PDI) der Polymere wurde gemäß DIN 55672-1 bestimmt; Elutionsmittel Hexafluoroisopropanol (HFIP) + 0,05 Gew.-% Trifluoroessigsäure-Kalium-Salz; Die Kalibrierung erfolgte mit eng verteilten Polymethylmethacrylat-Standards.

### A. Einsatzstoffe:

### Komponente i

### • Polybutylenterephthalat (PBT):

Ultradur® B2550 (Viskositätszahl VN = 107 ml/g) der BASF SE

### • Polybutylenadipat-coterephthalat (PBAT):

ecoflex® F Blend C 1200 von BASF SE

### • Polybutylensebacat-coterephthalat (PBSeT):

ecoflex® FS Blend A 1100 von BASF SE

### • Polybutylensuccinat-cosebacat (PBSSe):

Butandiol (89.0 g, 130 mol%), Bernsteinsäure (85.3 g, 95 mol%), Sebazinsäure (7.7 g, 5 mol%) und Glycerin 0,14 g (0,1 Gew.-%) wurden in Anwesenheit von TBOT (0.2 g) zunächst auf 200 °C erhitzt. Die Schmelze wurde während 80 min auf dieser Temperatur gehalten. Anschließend wurde bei vermindertem Druck (< 5 mbar) und einer maximalen Innentemperatur von 250 °C 1,4-Butandiol abdestilliert. Der Polyester wurde ausgegossen und nach Abkühlen analysiert. Der erhaltene Polyester wies eine Viskositätszahl von 214 mL/g auf.

### • Polymilchsäure (PLA - Vergleichspolyester)

Ingeo™ 4043D von NatureWorks LLC

### • Herstellung von Polycyclohexylendimethylen-2,5-furandicarboxylat (PCF):

In einen 1000 ml-Vierhalskolben wurden 203,9 g (1,4 mol) 1,4-Cyclohexandimethanol (cistrans-Mischung, cis/trans Verhältnis = 30:70) und 257,8 g (1,4 mol) 2,5- Furandicarbonsäuredimethylester eingewogen und mit Stickstoff gespült. Unter Stickstoff wurden die Komponenten auf 150°C erwärmt und dabei aufgeschmolzen. Bei 150°C wurden 0,28 g (0,8 mmol) Tetra-n-butylorthotitanat zugegeben. Anschließend wurde die Innentemperatur mit 1°/Minute auf 260°C angehoben und dabei entstehendes Methanol abdestilliert. Nach Erreichen der 260°C wurde noch 30 Minuten bei 260°C gerührt. Danach wurde Vakuum angelegt (< 1mbar) und die Schmelze bei 260°C gerührt. Dabei stieg die Viskosität des Produktes im Kolben ständig an, bis nach 45 min der Versuch beendet wurde. Es wurden 322 g PCF isoliert.
Die Viskositätszahl des PCF-Polymers betrug 133,4 ml/g.
DSC: Tg₂ = 87°C, Tk = 223,0°C, Tm₂ = 267,1°C, ΔH = 52 J/g

### • Herstellung von Polybutylensuccinat (PBS):

82,66 g Bernsteinsäure, 82,01 g 1,4-Butandiol, 0,12 g Glycerin und 0,06 g Tetrabutylorthotitanat (TBOT) wurden in einem 250 mL Vierhalskolben vorgelegt und die Apparatur wurde mit Stickstoff gespült. Anschließend wurde Wasser bis zu einer Innentemperatur von 220 °C abdestilliert. Es wurden 0,32 g Phosphorige Säure und 0,06 g Tetrabutylorthotitanat zugesetzt, Vakuum angelegt (1 mbar) und auf eine Innentemperatur von 270 °C hochgeheizt, wobei überschüssiges Butandiol entfernt wurde. Nach Erreichen der gewünschten Viskosität wurde auf Raumtemperatur abgekühlt.
VZ = 127,5 mL/g

### • Herstellung von Poly(butylensuccinat-cofurandicarboxylat) (PBSF):

### (Molverhältnis Furandicarbonsäure : Bernsteinsäure = 70 : 30)

387,72 g Dimethylfurandicarboxylat, 324,43 g 1,4-Butandiol und 0,64 g Tetrabutylorthotitanat (TBOT) wurden in einem 1 L Vierhalskolben vorgelegt und die Apparatur wurde mit Stickstoff gespült. Methanol wurde bis zu einer Innentemperatur von 190 °C abdestilliert. Anschließend wurden 106,28 g Bernsteinsäure und 0,60 g Glycerin hinzugegeben und Wasser bis zu einer Innentemperatur von 200 °C abdestilliert. Es wurde Vakuum angelegt (1 mbar, Stickstoffstrom) und auf eine Innentemperatur von 210 °C hochgeheizt, um überschüssiges 1,4-Butandiol zu entfernen. Nach Erreichen der gewünschten Viskosität wurde auf Raumtemperatur abgekühlt.
VZ = 53,1 mL/g; Mn = 16000 g/mol; PDI = 2,8

### • Herstellung von Poly(butylensebacat-co-furandicarboxylat) (PBSeF):

### (Molverhältnis Furandicarbonsäure : Sebazinsäure = 70 : 30)

128,91 g Dimethylfurandicarboxylat, 69,79 g Sebazinsäure, 108,14 g 1,4-Butandiol, 0,22 g Glycerin und 0,24 g Tetrabutylorthotitanat (TBOT) wurden in einem 500 mL Vierhalskolben vorgelegt und die Apparatur wurde mit Stickstoff gespült. Methanol wurde bis zu einer Innentemperatur von 190 °C abdestilliert. Anschließend wurde Vakuum angelegt (1 mbar, Stickstoffstrom) und auf eine Innentemperatur von 210 °C hochgeheizt, um überschüssiges 1,4-Butandiol zu entfernen. Nach Erreichen der gewünschten Viskosität wurde auf Raumtemperatur abgekühlt.
Mn = 24900 g/mol; PDI = 2,9

### Komponente ii:

### • Herstellung von Poly(ethylen-furandicarboxylat) (PEF):

### Ansatz 1:

In einem 250ml-Vierhalskolben wurden 70,2 g (1,1 mol, 2,5 Äq) Ethylenglykol und 82,9 g (0,45 mol, 1 Äq) 2,5-Furandicarbonsäuredimethylester eingewogen und mit Stickstoff gespült. Unter Stickstoff wurden die Komponenten auf 150°C erwärmt und dabei aufgeschmolzen. Bei 150°C wurden 0,07 g (0,2 mmol) Tetra-n-butylorthotitanat zugegeben. Anschließend wurde die Innentemperatur mit 1°/Minute auf 235°C angehoben und dabei entstehendes Methanol abdestilliert. Nach Erreichen der 235°C wurde noch 30 Minuten bei 235°C gerührt. Danach wurden 0,07 g (0,1 mmol) Tris(nonylphenyl)-phosphit zugegeben, Vakuum angelegt (< 1mbar) und die Schmelze bei 240°C gerührt. Dabei stieg die Viskosität des Produktes im Kolben ständig an, bis nach 80 min der Versuch beendet wurde. Es wurden 58 g PEF isoliert.
Die Viskositätszahl gemäß ISO 1628-5 des PEF-Polymers betrug 52,4 ml/g.
DSC: Tg₂ = 88°C, kein Schmelzpunkt/Rekristallisationspunkt
GPC: Mn = 28000 g/mol; Mw = 77500 g/mol; PDI = 2,1

### Ansatz 2:

In einem weiteren Ansatz wurde analog zu oben beschriebenen Verfahren eine zweite Charge PEF hergestellt. Die Viskositätszahl gemäß ISO 1628-5 des PEF-Polymers betrug 38,9 ml/g

### Ansatz 3:

In einem weiteren Ansatz wurde analog zu oben beschriebenen Verfahren eine dritte Charge PEF hergestellt. Die Viskositätszahl gemäß ISO 1628-5 des PEF-Polymers betrug 30,4 ml/g

### Ansatz 4:

In einem weiteren Ansatz wurde analog zu oben beschriebenen Verfahren eine vierte Charge PEF hergestellt. Die Viskositätszahl gemäß ISO 1628-5 des PEF-Polymers betrug 14,9 ml/g

### Nukleierungsmittel (Vergleichssysteme):

- Talkum IT Extra (Talk) von der Firma Fisher Scientific
- Natriumhypophosphit, Natriumbenzoat und Natriumstearat von Sigma Aldrich
- Rußbatch besteht aus 20 Gew.-% des Rußes Black Pearls 880 von Cabot und 80 Gew.-% Ultradur® B2550 der BASF SE
- AClyn® 285 von Honeywell ist ein lonomer (Copolymer aus Ethylen und Natriumacrylat)

### B. Herstellung der Polymermischungen:

Die Polyester i der Tabelle 1 wurden mit den verschiedenen Nukleierungsmitteln in einem Doppelschnecken-Extruder (DSM Midi 2000) bei einer Schmelzetemperatur von 280°C, einer Verweilzeit von 3 min und einer Drehzahl von 100 min⁻¹ extrudiert. Die Dosierung der Additive erfolgte mit dem Granulat im Kalteinzug. Auf diese Weise wurden die Compounds der Tabelle 1 hergestellt.

Die verschiedenen Polyester i der Tabelle 2 wurden mit PEF in einem DoppelschneckenExtruder (DSM Midi 2000) bei einer Schmelzetemperatur von 160 °C, 180 °C oder 200 °C (PLA), einer Verweilzeit von 5 min und einer Drehzahl von 80 min⁻¹ extrudiert. Auf diese Weise wurden die Compounds der Tabelle 2 hergestellt.

### C. Ergebnisse

**Tabelle 1: Rekristallisationspunkt T_{K} und Temperatur des Kristallisationsbeginns T_{KB} (PEF in aromatischen Polyestern i)**

| | Zusammensetzung [Gew.-%] | T_{K} [°C] | T_{kB} [°C] |
|---|---|---|---|
| Referenz | 100 PCF | 216,8 | 234 |
| Vgl.-Beispiel 1a | 99,9 PCF + 0,1 Talk | 228,9 | 242 |
| Vgl.-Beispiel 1b | 99 PCF + 1 Talk | 228,3 | 242 |
| Vgl.-Beispiel 1c | 99,5 PCF + 0,5 Natriumhypophosphit | 218,6 | 235 |
| Vgl.-Beispiel 1d | 98,75 PCF + 1,25 Rußbatch | 225,6 | 240 |
| Vgl.-Beispiel 1e | 99 PCF + 1 Natriumstearat | 223,9 | 238 |
| Vgl.-Beispiel 1f | 99,5 PCF + 0.5 Natriumbenzoat | 222,6 | 238 |
| Vgl.-Beispiel 1g | 99,5 PCF + 0.5 AClyn 285 | 221,9 | 236 |
| Beispiel 1 | 99 PCF + 1 PEF* | 243,3 | 264 |
| Beispiel 2 | 90 PCF + 10 PEF* | 227,9 | 248 |
| | | | |
| Referenz | 100 PBT | 180,0 | 200,8 |
| Beispiel 3 | 99 PBT+ 1 PEF* | 194,6 | 203 |

| | | | |
|---|---|---|---|
| PEF* hat eine VZ von 52,4 mL/g | | | |

**Tabelle 2: Rekristallisationspunkt T_{K} und Temperatur des Kristallisationsbeginns T_{KB} (PEF in aliphatisch-aromatischen und aliphatischen Polyestern i)**

| Beispiele | PBS | PBSSe | PBSF | PBSeF | PBSeT | PBAT | PEF _{VZ 30,4} | PEF _{VZ 14,9} | T_{Extrusion} | T_{KB} | T_{K} |
|---|---|---|---|---|---|---|---|---|---|---|---|
| | [Gew.-%] | [Gew.-%] | [Gew.-%] | [Gew.-%] | [Gew.-%] | [Gew.-%] | [Gew.-%] | [Gew.-%] | [°C] | [°C] | [°C] |
| Ref. 4 | 100 | | | | | | 0 | | 180 | 86 | 70 |
| Bsp. 4.1 | 99 | | | | | | 1 | | 180 | 91 | 80 |
| Bsp. 4.2 | 96 | | | | | | 4 | | 180 | 90 | 77 |
| Bsp. 4.3 | 90 | | | | | | 10 | | 180 | 88 | 78 |
| Ref. 5 | | 100 | | | | | 0 | | 180 | 81 | 50 |
| Bsp. 5.1 | | 99 | | | | | 1 | | 180 | 84 | 71 |
| Bsp. 5.2 | | 96 | | | | | 4 | | 180 | 81 | 66 |
| Bsp. 5.3 | | 90 | | | | | 10 | | 180 | 81 | 68 |
| Ref. 6 | | | 100 | | | | | 0 | 160 | -- | -- |
| Bsp. 6.1 | | | 99 | | | | | 1 | 160 | 118 | 78 |
| Bsp. 6.2 | | | 96 | | | | | 4 | 160 | 123 | 87 |
| Bsp. 6.3 | | | 90 | | | | | 10 | 160 | 127 | 90 |
| Ref. 7 | | | | 100 | | | | 0 | 180 | -- | -- |
| Bsp. 7.1 | | | | 99 | | | | 1 | 180 | 95 | 66 |
| Bsp. 7.2 | | | | 96 | | | | 4 | 180 | 116 | 66 |
| Bsp. 7.3 | | | | 90 | | | | 10 | 180 | 120 | 68 |
| Ref. 8 | | | | | 100 | | 0 | | 180 | 76 | 60 |
| Bsp. 8.1 | | | | | 99 | | 1 | | 180 | 99 | 67 |
| Bsp. 8.2 | | | | | 96 | | 4 | | 180 | 105 | 66 |
| Bsp. 8.3 | | | | | 90 | | 10 | | 180 | 101 | 66 |
| Ref. 9 | | | | | | 100 | | 0 | 180 | 62 | 38 |
| Bsp. 9.1 | | | | | | 99 | | 1 | 180 | 100 | 76 |
| Bsp. 9.2 | | | | | | 96 | | 4 | 180 | 105 | 76 |
| Bsp. 9.3 | | | | | | 90 | | 10 | 180 | 105 | 75 |

## Patentansprüche

1. Polyestermischung enthaltend:
i) 95 bis 99,95 Gew.-%, bezogen auf die Komponenten i und ii, eines Polyesters ausgewählt aus der Gruppe bestehend aus: Polybutylenterephthalat, Polycyclohexylendimethylen-2,5-furandicarboxylat, Polybutylenadipat-coterephthalat, Polybutylensebacat-coterephthalat, Polybutylensuccinat-coterephthalat, Polybutylen-2,5-furan-dicarboxylat-cosuccinat, Polybutylen-2,5-furandicarboxylat-coadipat, Polybutylen-2,5-furandicarboxylat-coazelat, Polybutylen-2,5-furandicarboxylatcosebacat, Polybutylen-2,5-furandicarboxylat-cobrassylat, Polybutylen-2,5-furandicarboxylat-co-1,18-C₁₈-dicarboxylat, Polybutylensuccinat, Polybutylenadipat, Polybutylensuccinat-coadipat, Polybutylensuccinat-cosebacat, Polybutylensebacat oder Mischungen von 2 oder mehreren der genannten Polyester und
ii) 0,05 bis 5% Gew.-%, bezogen auf die Komponenten i und ii, Polyethylen-2,5-furandicarboxylat.

2. Polyestermischung nach Anspruch 1, wobei der Polyester ein Polybutylen-2,5-furandicarboxylat-cosuccinat, Poly-butylen-2,5-furandicarboxylat-coadipat, Poly-butylen-2,5-fu randicarboxylat-coazelat, Poly-butylen-2,5-furandicarboxylat-cosebacat, Poly-butylen-2,5-furandicarboxylat-cobrassylat oder Polybutylen-2,5-furandicarboxylat-co-1,18-C₁₈-dicarboxylat ist.

3. Polyestermischung nach Anspruch 1, wobei der Polyester i Polycyclohexylendimethylen-2,5-furandicarboxylat ist.

4. Polyestermischung nach Anspruch 1, wobei der Polyester i ein Polybutylenadipat-coterephthalat, Polybutylensebacat-coterephthalat, Polybutylensuccinat-coterephthalat, Polybutylensuccinat, Polybutylenadipat, Polybutylensuccinat-coadipat, Polybutylensuccinat-cosebacat oder Polybutylensebacat ist.

5. Polyestermischung nach Anspruch 1 bis 4, enthaltend 0,1 bis 2,0 Gew.-%, bezogen auf die Komponenten i und ii, eines Polyethylen-2,5-furandicarboxylats.

6. Polyestermischung nach Anspruch 3, enthaltend ein Poly-ethylen-2,5-furandicarboxylat mit eine Viskositätszahl gemäß ISO 1628-5 von größer 40 ml/g.

7. Polyestermischung nach Anspruch 4, enthaltend ein Polyethylen-2,5-furandicarboxylat mit eine Viskositätszahl gemäß ISO 1628-5 von größer 10 ml/g.

## Claims

1. A polyester mixture comprising:
i) from 95 to 99.95% by weight, based on components i and ii, of a polyester selected from the group consisting of: polybutylene terephthalate, polycyclohexylenedimethylene 2,5-furandicarboxylate, polybutylene adipate-co-terephthalate, polybutylene sebacate-co-terephthalate, polybutylene succinate-co-terephthalate, polybutylene 2,5-furandicarboxylate-co-succinate, polybutylene 2,5-furandicarboxylate-co-adipate, polybutylene 2,5-furandicarboxylate-co-azelate, polybutylene 2,5-furandicarboxylate-co-sebacate, polybutylene 2,5-furandicarboxylate-co-brassylate, polybutylene 2,5-furandicarboxylate-co-1,18-C₁₈-dicarboxylate, polybutylene succinate, polybutylene adipate, polybutylene succinate-co-adipate, polybutylene succinate-co-sebacate, polybutylene sebacate or mixtures of 2 or more of the polyesters mentioned, and
ii) from 0.05 to 5% by weight, based on components i and ii, of polyethylene 2,5-furandicarboxylate.

2. The polyester mixture according to claim 1, where the polyester is a polybutylene 2,5-furandicarboxylate-co-succinate, polybutylene 2,5-furandicarboxylate-co-adipate, polybutylene 2,5-furandicarboxylate-co-azelate, polybutylene 2,5-furandicarboxylate-co-sebacate, polybutylene 2,5-furandicarboxylate-co-brassylate or polybutylene 2, 5-furandicarboxylate-co-1,18-C₁₈-dicarboxylate.

3. The polyester mixture according to claim 1, where the polyester i is polycyclohexylenedimethylene 2,5-furandicarboxylate.

4. The polyester mixture according to claim 1, where the polyester i is a polybutylene adipate-co-terephthalate, polybutylene sebacate-co-terephthalate, polybutylene succinate-co-terephthalate, polybutylene succinate, polybutylene adipate, polybutylene succinate-co-adipate, polybutylene succinate-co-sebacate or polybutylene sebacate.

5. The polyester mixture according to any of claims 1 to 4, comprising from 0.1 to 2.0% by weight, based on components i and ii, of a polyethylene 2,5-furandicarboxylate.

6. The polyester mixture according to claim 3, comprising a polyethylene 2,5-furandicarboxylate with intrinsic viscosity of more than 40 ml/g in accordance with ISO 1628-5.

7. The polyester mixture according to claim 4, comprising a polyethylene 2,5-furandicarboxylate with intrinsic viscosity of more than 10 ml/g in accordance with ISO 1628-5.

## Revendications

1. Mélange de polyester, contenant :
i) 95 à 99,95 % en poids, par rapport aux composants i et ii, d'un polyester choisi dans le groupe constitué par : le polybutylène-téréphtalate, le polycyclohexylène-diméthylène-2,5-furane-dicarboxylate, le polybutylène-adipate-co-téréphtalate, le polybutylène-sébacate-co-téréphtalate, le polybutylène-succinate-co-téréphtalate, le polybutylène-2,5-furane-dicarboxylate-co-succinate, le polybutylène-2,5-furane-dicarboxylate-co-adipate, le polybutylène-2,5-furane-dicarboxylate-co-azélate, le polybutylène-2,5-furane-dicarboxylate-co-sébacate, le polybutylène-2,5-furane-dicarboxylate-co-brassylate, le polybutylène-2,5-furane-dicarboxylate-co-1,18-dicarboxylate en C₁₈, le polybutylène-succinate, le polybutylène-adipate, le polybutylène-succinate-co-adipate, le polybutylène-succinate-co-sébacate, le polybutylène-sébacate ou les mélanges de 2 ou plus des polyesters mentionnés, et
ii) 0,05 à 5 % en poids, par rapport aux composants i et ii, de polyéthylène-2,5-furane-dicarboxylate.

2. Mélange de polyester selon la revendication 1, dans lequel le polyester est un polybutylène-2,5-furane-dicarboxylate-co-succinate, un polybutylène-2,5-furane-dicarboxylate-co-adipate, un polybutylène-2,5-furane-dicarboxylate-co-azélate, un polybutylène-2,5-furane-dicarboxylate-co-sébacate, un polybutylène-2,5-furane-dicarboxylate-co-brassylate ou un polybutylène-2,5-furane-dicarboxylate-co-1,18-dicarboxylate en C₁₈.

3. Mélange de polyester selon la revendication 1, dans lequel le polyester i est le polycyclohexylène-diméthylène-2,5-furane-dicarboxylate.

4. Mélange de polyester selon la revendication 1, dans lequel le polyester i est un polybutylène-adipate-co-téréphtalate, un polybutylène-sébacate-co-téréphtalate, un polybutylène-succinate-co-téréphtalate, un polybutylène-succinate, un polybutylène-adipate, un polybutylène-succinate-co-adipate, un polybutylène-succinate-co-sébacate ou un polybutylène-sébacate.

5. Mélange de polyester selon les revendications 1 à 4, contenant 0,1 à 2,0 % en poids, par rapport aux composants i et ii, d'un polyéthylène-2,5-furane-dicarboxylate.

6. Mélange de polyester selon la revendication 3, contenant un polyéthylène-2,5-furane-dicarboxylate ayant un indice de viscosité selon ISO 1628-5 supérieur à 40 ml/g.

7. Mélange de polyester selon la revendication 4, contenant un polyéthylène-2,5-furane-dicarboxylate ayant un indice de viscosité selon ISO 1628-5 supérieur à 10 ml/g.
